# EUROPÄISCHE PATENTSCHRIFT

(11) **EP 1 286 752 B1**
(45) Veröffentlichungstag und Bekanntmachung des Hinweises auf die Patenterteilung: **23.04.2008**
(21) Anmeldenummer: 01951351.4
(22) Anmeldetag: 30.05.2001
(51) Int. Cl.: B01D 53/04

(54) **FILTER INSBESONDERE FÜR EIN FAHRZEUG**
FILTER, IN PARTICULAR FOR A VEHICLE
FILTRE, EN PARTICULIER POUR UN VEHICULE

(30) Priorität: 31.05.2000 DE 10026902
(43) Veröffentlichungstag der Anmeldung: 05.03.2003
(73) Patentinhaber: helsa-automotive GmbH & Co. KG, 95482 Gefrees (DE)
(72) Erfinder: ROLLAND, Torsten, 95497 Goldkronach (DE); MARX, Martina, 92237 Sulzbach-Rosenberg (DE); KEIBEL, Thorsten, 95213 Münchberg (DE)
(74) Vertreter: LOUIS, PÖHLAU, LOHRENTZ
(86) Internationale Anmeldenummer: PCT/DE2001/002041
(87) Internationale Veröffentlichungsnummer: WO 2001/091886

(56) Entgegenhaltungen:
- EP-A- 0 383 236
- DE-A- 4 407 149
- DE-A- 19 845 526
- GB-A- 2 013 102
- US-A- 4 433 024
- US-A- 4 797 318

## Beschreibung

Die Erfindung betrifft einen Filter insbesondere für ein Fahrzeug mit einer adsorptiven Lage, die in einer dreidimensionalen Fasermatrix fixierte partikelförmige Adsorbentien aufweist.

Die Integration von Filtern beispielsweise in die Außenluft-Zuführung zur Fahrgastzelle von Personen- und Nutzkraftwagen hat eine rasante Entwicklung genommen. Ein Großteil aller Neufahrzeuge wird bereits mit einem solchen Filter ausgerüstet. Bei diesen Filtern handelt es sich beispielsweise um Partikelfilter oder um Kombinationsfilter, bei welchen ein Partikelfilter mit einem Geruchsfilter kombiniert ist. In hochwertigen Fahrzeugen werden als Geruchsfilter reine Aktivkohlefilter eingesetzt. Diesen sind anströmseitig Partikelfilter oder Kombinationsfilter vorgeschaltet, um partikuläre Verunreinigungen bzw. um hochsiedende Substanzen in einer Vorstufe des Aktivkohle-Geruchsfilters "AKGF" aus dem Luftstrom zu entfernen. Bei den bislang zum Einsatz gelangenden Aktivkohle-Geruchsfiltern handelt es sich um volumenexpandierte Schüttbettfilter. Bei diesen sind die partikelförmigen Adsorbentien an einem retikulierten Kunststoff-Schaummaterial, bei dem es sich beispielsweise um ein Polyurethan-Schaummaterial handelt, fixiert. Hierbei werden die wesentlichen Nachteile einer reinen Schüttung aus partikelförmigen Adsorbentien wie der relativ hohe Strömungswiderstand, der Partikelabrieb und die Leckagenbildung während der Betriebs- d.h. Standzeit eliminiert. Ein Mangel dieser bekannten volumenexpandierten Schüttbettfilter besteht darin, daß infolge der reduzierten Adsorbienten-Quantität pro Volumeneinheit die Aufnahme- d.h. Adsorptionskapazität vergleichsweise niedrig ist.

Aktivkohle-Geruchsfilter für Fahrzeuge werden im wesentlichen über ihren Druckabfall, ihre Speicherkapazität von Geruchsstoffen, d.h. beispielsweise die n-Butan-Durchbruchskurve, und über ihren Sofortdurchbruch nach Filter charakterisiert.

Die Durchbruchskurve soll einen S-förmigen Verlauf aufweisen. Idealerweise soll die Durchbruchskurve einer Treppenfunktion ähneln, d.h. nach einem möglichst langen Nulldurchbruch nach Filter soll der Anstieg der Durchbruchskurve dann möglichst steil verlaufen. Neben dem genannten Sofortdurchbruch nach Filter kann zur Charakterisierung auch der Durchbruch nach einer definierten Zeit für die Bewertung des Filters herangezogen werden.

Bekannt sind Aktivkohle-Geruchsfilter, die als partikelförmige Adsorbentien Granulatkohle oder Kugelkohle verwenden. Aktivkohle-Geruchsfilter auf Basis von Granulatkohle zeichnen sich durch ein gutes Aufnahmevermögen für zahlreiche Geruchsstoffe aus. Sowohl ihre Aufnahmekapazität als auch ihr Sofortdurchbruchsverhalten können derartig optimiert sein, daß Geruchsereignisse in der Fahrgastzelle weitestgehend unterbunden werden.
Weiter unten und in der ebenfalls weiter unten angegebenen Vergleichstabelle ist als Beispiel 1 ein derartiges Aktivkohle-Geruchsfilter auf Basis von Granulatkohle beschrieben.

Aktivkohle-Geruchsfilter mit kugelförmigen Adsorbienten im volumenexpandierten Schüttbett, wobei die Adsorbienten auf einem retikulierten Kunststoff-Schaummaterial fixiert sind, weisen neben den oben erwähnten Vorteilen im Vergleich mit einem Aktivkohle-Geruchsfilter auf Basis von Granulatkohle den weiteren Vorteil eines deutlich niedrigeren Strömungswiderstandes auf. Ein nicht zu vernachlässigender Nachteil ist jedoch der um ein Mehrfaches höhere Preis für die kugelförmige Aktivkohle.

In der DE 32 28 156 C2 ist ein solcher Filter bzw. die Verwendung eines flexiblen Flächenfilters aus einer luftdurchlässigen flexiblen Trägerschicht, insbesondere einem Gewebe, und daran auf mindestens einer Seite mit Säulenbekrönungen, Tragsäulen oder - sockeln aus einer erstarrten Haftmasse in einer Menge zwischen 50 und 500 g/m² fixierten Aktivkohlekömern eines Durchmessers von 0,1 bis 0,7 mm, insbesondere 0,5 mm, in einem Luftreinigungsgerät zur Beseitigung von Geruchs- und Schadstoffen in Kraftfahrzeugen oder Straßen- und Eisenbahnen beschrieben.

Die Entwicklung geht generell in die Richtung, daß sich das zur Verfügung stehende Einbauvolumen für den jeweiligen Filter in nachfolgenden Fahrzeug-Generationen jeweils verkleinert. Die adsorptive Filterleistung soll jedoch zumindest gleich bleiben oder sogar vergrößert sein. Ein Verfahren, den Aktivkohleanteil bezogen auf das Einbauvolumen zu steigern, ohne den Strömungswiderstand zu erhöhen, beschreibt die DE 196 12 592 C2. Hier wird ein Verfahren zur Herstellung eines Filterkörpers aus miteinander durch einen Klebstoff fest verbundenen partikelförmigen Adsorbentien beschrieben, wobei der Filterkörper mit Durchgangskanälen ausgebildet ist. Zur Ausbildung der Durchgangskanäle wird ein mit Durchgangslöchern versehenes Bodenelement mit Durchgangslöchern verwendet, durch die Nadeln durchgesteckt werden, die die Durchgangslöcher abschließen. Die Nadeln ragen in einen durch das Bodenelement begrenzten Gehäuseraum hinein, in den die partikelförmigen Adsorbentien eingefüllt werden. Die Nadeln stehen mit ihren Endabschnitten aus dem Bett, das aus den partikelförmigen Adsorbentien besteht, heraus. Die partikelförmigen Adsorbentien werden dann durch den Klebstoff zum Filterkörper verfestigt, wonach die Nadeln aus dem Filterkörper herausgezogen werden. Durch die geometrisch ausgerichteten Durchgangskanäle, den relativ geringen Klebstoffanteil und den großen Anteil an partikelförmigen Adsorbentien werden die im weiter unten aufgeführten Beispiel 2 und in der Vergleichstabelle angegebenen Filtereigenschaften erreicht. Aus dem Beispiel 2 ist jedoch ersichtlich, daß dieser bekannte Filterkörper die gewünschten kinetischen Daten nicht erzielt, was insbesondere beim Null-Sofortdurchbruch zum Ausdruck kommt.

Die EP 0 383 236 B1 beschreibt einen Filter, insbesondere für die Reinigung der einer Fahrgastzelle eines Fahrzeuges zugeführten Luft, mit einer zick-zack-förmig gefalteten partikelabscheidenden adsorptiven Filterlage, wobei die partikelabscheidende und die adsorptive Lage in Strömungsrichtung der Luft hintereinander angeordnet sind und die Partikelfilterlage flächig unmittelbar neben der adsorptiven Filterlage angeordnet und mit der adsorptiven Filterlage gemeinsam derart zick-zack-förmig zusammengefaltet ist, daß die Faltabschnitte der adsoptiven Filterlage und die Faltabschnitte der Partikelfilterlage in Richtung der Luftströmung liegen und ineinandergreifen. Bei diesem Filter handelt es sich um einen Kombinationsfilter, wie er eingangs erwähnt worden ist, d.h. um einen kombinierten Partikel- und Geruchsfilter.

Die DE 198 45 526 C2 beschreibt ein Verfahren zur Herstellung eines Filtermaterials, insbesondere in Form von Flächenware, für fluide Medien mit einer Trägerschicht und einer Adsorptionsschicht, die von mit partikelförmigen Adsorbentien beladenen Schmelzkleberfäden gebildet ist, wobei wenigstens ein Schmelzkleberfaden aus wenigstens einer Düse in Richtung eines beabstandet an der wenigstens einen Düse entlanggeführten Trägervlieses versprüht wird, wobei das Beladen des wenigstens einen Schmelzkleberfadens mit partikelförmigen Adsorbentien im Bereich des Abschnittes zwischen der Düse und dem Trägervlies erfolgt, und dieser wenigstens eine mit partikelförmigen Adsorbentien beladene Schmelzkleberfaden nachfolgend auf das Trägervlies auftrifft und partiell am Trägervlies haftet. Auf Basis dieses Flächen-Filtermaterials kombiniert mit einem Partikelfiltermedium lassen sich Kombinationsfilter mit guten Filtereigenschaften herstellen. Im Vergleich zu den oben beschriebenen Aktivkohle-Geruchsfiltern zeichnet sich das Flächen-Filtermaterial gemäß der zuletzt zitierten Patentanmeldung 198 45 526 durch einen extrem niedrigen Strömungswiderstand aus. Kombinationsfilter auf der Basis dieses adsorptiven Flächenmediums lassen sich in vorteilhafter Weise vergleichsweise kostengünstig in großen Stückzahlen herstellen. Ein Mangel dieses adsorptiven Flächenfiltemlaterials besteht in seinem relativ hohen Sofortdurchbruch und im Fehlen eines S-förmigen Verlaufes der Durchbruchskurve, wie er von volumenexpandierten Schüttbettfiltern der eingangs erwähnten Art bekannt und erwünscht ist. Bedingt durch das meistens sehr kleine EinbauVolumen im jeweiligen Fahrzeug resultiert außerdem nur eine begrenzte Aufnahmekapazität gegenüber Geruchsstoffen.

Aus der DE 195 14 887 C2 ist ein adsorbierendes biegsames Filterflächengebilde aus einem luftdurchlässigen biegsamen textilen Trägermaterial und aus darauf mit einem thermoplastischen Bindemittel fixierten partikelförmigen Adsorbentien eines mittleren Durchmessers von (100 bis 5000) µm bekannt. Die partikelförmigen Adsorbentien sind auf ihrer Oberfläche mit voneinander beabstandeten Bindemittelpartikeln belegt, deren mittlerer Durchmesser kleiner ist als derjenige der Adsorbentien. Die partikelförmigen Adsorbentien sind auch untereinander durch Bindemittelpartikel verbunden. Die Belegung des Trägermaterials mit den Adsorbentien beträgt mehr als 200 g/m². Das Flächengebilde kann bei einer Gesamtdicke von (0,5 bis 5) mm und bei mittleren Adsorbens-Durchmessern bis 5000 µm einen Biegeradius von höchstens 5 mm zerstörungsfrei einnehmen.

Die DE 693 16 027 T2 beschreibt ein Verfahren zur Herstellung einer faserigen, adsorptive Teilchen umfassenden Struktur, wobei das Verfahren das Bilden einer faserigen Stoffbahn in der Trockne umfaßt, die thermoplastische Regenerat-Fasern umfaßt und eine obere und eine untere Oberfläche aufweist. Gekennzeichnet ist dieses bekannte Verfahren durch die Stufen:
a) des anschließenden Verteilens und Einfangens adsorptiver Teilchen einer ausreichenden Größe und eines ausreichenden Gewichts in innen lokalisierten Hohlräumen der offenen, faserigen Stoffbahn, wobei die Fasern eine Fadenfeinheit pro Filament von 1,1 bis 16,7 dtex (1 bis 15 Denier pro Filament) haben, gekräuselte Stapel-Compositfasern sind und eine strukturelle Komponente und eine relativ niedriger schmelzende Komponente umfassen, und
b) der anschließenden Anwendung von Wärme, vorzugsweise Infrarotwärme, vor jeglicher Anwendung von Druck, auf die faserige Stoffbahn, um die eingefangenen Teilchen mit den Composit-Fasern in der Schmelze zu verbinden, und die Composit-Fasern an den Überkreuzungspunkten thermisch zu verbinden.

Aus der DE 42 15 265 A1 ist ein Filtereinsatz für ein Fluid, insbesondere Luft, bekannt, mit einer mehrfach gefalteten Bahn aus mindestens einer Lage Filterstoff, wobei die Falten der Bahn jeweils im wesentlichen quer zur Längsrichtung der Bahn durchlaufende Scheitelbereiche und Sohlenbereiche aufweist und etwa gleiche Abmessungen besitzen, wobei das zu filternde Fluid in Richtung auf die Scheitelbereiche einströmt und in Richtung von den Sohlenbereichen abströmt, und wobei die Falten in einem vorgebbaren Abstand voneinander angeordnet und im Bereiche der Stirnseiten verklebt sind. Dieser bekannte Filtereinsatz weist eine rahmenförmig angeordnete Schicht aus einer Mischung aus Papierbrei und härtbarem Klebstoff auf.

Der Erfindung liegt die Aufgabe zugrunde, einen Filter der eingangs genannten Art zu schaffen, der einen geringen Strömungswiderstand, eine große Geruchsspeicherkapazität, einen geringen Sofortdurchbruch, einen niedrigen Durchbruch nach einer definierten Zeit und einen S-förmigen Verlauf der Durchbruchskurve aufweist und kostengünstig herstellbar ist.

Diese Aufgabe wird erfindungsgemäß von einem Filter mit den Merkmalen des Anspruches 1, d.h. dadurch gelöst, daß die Adsorptionsschicht der mindestens einen adsorptiven Lage eine Adsorbensmenge von wenigstens 1500 g/m², vorzugsweise (1780 bis 2800) g/m², enthält und eine Dicke von (4,0 bis 6,5) mm, vorzugsweise (4,5 bis 5,5) mm aufweist, wobei mindestens eine adsorptive Filterlage plissiert ist und das plissierte Gebilde aus der mindestens einen adsorptiven Lage von einem Filterrahmen seitlich umschlossen ist, und wobei die spezifische Adsorbensmenge > 140 g partikelförmiges Adsorbens/dm³ Filtervolumen, vorzugsweise (170 bis 260) g partikelförmiges Adsorbens/dm³ Filtervolumen, beträgt.

Bei dem erfindungsgemäßen Filter kann der flächige Filterkörper eine einzige flächige adsorptive Lage aufweisen, die eine Trägerschicht und eine Adsorptionsschicht aufweist, wobei die Trägerschicht abströmseitig vorgesehen ist. Bevorzugt ist es jedoch, wenn der flächige Filterkörper zwei flächige adsorptive Lagen aufweist, die jeweils eine Trägerschicht und eine Adsorptionsschicht aufweisen und miteinander plisisiert sind, wobei die Adsorptionsschichten einander zugewandt und die Trägerschichten voneinander abgewandt sind.

Die dreidimensionale Fasermatrix der/jeder Adsorptionsschicht besteht in vorteilhafter Weise aus gesprühten Klebstofffäden, wodurch sich die Fertigung der/jeder Adsorptionsschicht sehr günstig gestaltet.

Durch die abströmseitige Trägerschicht der einzigen flächigen adsorptiven Lage und insbesondere durch die beiden voneinander abgewandten Trägerschichten der zwei flächigen adsorptiven Lagen werden lockere partikelförmige Adsorbentien im Filtermedium gehalten.

Bei dem erfindungsgemäßen Filter können die partikelförmigen Adsorbentien vorteilhafterweise von Aktivkohlepartikeln gebildet sein. Die adsorptive Lage kann auch andere geeignete Sorbienten und/oder Katalysator-Partikel aufweisen.

Die die dreidimensionale Matrix bildenden Fasern, an denen die partikelförmigen Sorbienten und/oder Katalysatoren partiell fixiert sind, können zumindest teilweise elektrostatisch aufgeladen sein. Diese elektrostatische Aufladung kann, wenn die Matrix aus Klebstofffäden besteht, während des Sprühens erfolgen.

Der erfindungs gemäße Filter kann ein- oder mehrlagig aufgebaut sein.

Weitere Einzelheiten, Merkmale und Vorteile ergeben sich aus der nachfolgenden Beschreibung eines in der Zeichnung schematisiert dargestellten Ausführungsbeispieles des erfindungsgemäßen Filters sowie aus den unter gleichen Bedingungen vermessenen Ausführungsbeispielen bekannter Filter im Vergleich mit erfindungsgemäßen Filtern. Es zeigen:
- Figur 1: perspektivisch einen Abschnitt des Filters,
- Figur 2: stark vergrößert und nicht maßstabgetreu das Detail II gemäß Figur 1 einer ersten Ausbildung des Filters, und
- Figur 3: eine der Figur 2 ähnliche Darstellung, wobei der flächige Filterkörper nicht eine einzige adsorptive Lage sondern zwei flächige adsorptive Lagen aufweist, die miteinander gemeinsam plissiert sind.

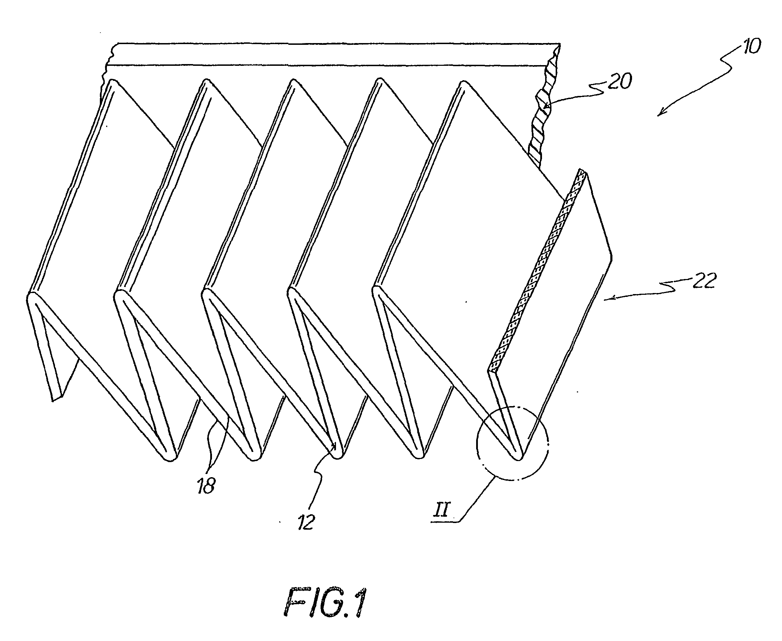

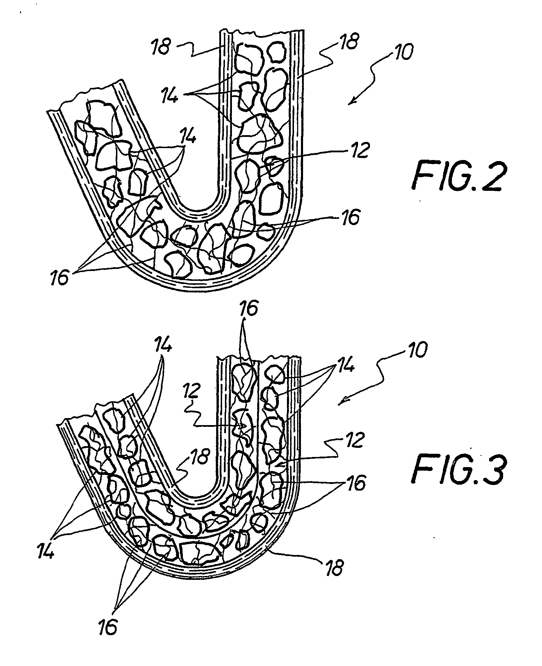

Figur 1 zeigt abschnittweise perspektivisch und nicht maßstabsgetreu eine Ausbildung des Filters 10, bei dem es sich um einen flächenexpandierten Schüttbettfilter "FES" handelt. Der Filter 10 weist mindestens eine flächige adsorptive Lage 12 auf. In Figur 2 ist eine einzige flächige adsorptive Lage 12 schematisch dargestellt. Demgegenüber verdeutlicht die Figur 3 eine Ausbildung, bei der der Filter 10 zwei flächige adsorptive Lagen 12 aufweist.

Die/jede adsorptive Lage 12 weist partikelförmigen Adsorbentien 14 auf, die durch Klebstofffäden 16 fixiert sind, die in der jeweiligen adsorptiven Lage 12 bzw. Adsorptionsschicht eine dreidimensionale Matrix bilden. Die einzige adsorptive Lage 12 bzw. Adsorptionsschicht gemäß Figur 2 enthält eine Adsorbensmenge von wenigstens 1500 g/m², vorzugsweise (1780 bis 2800)g/m² Entsprechend enthalten die beiden adsorptiven Lagen 12 gemäß Figur 3 gemeinsam eine Adsorbensmenge von wenigstens 1500 g/m², vorzugsweise (1780 bis 2800) g/m².

Die adsorptive Lage bzw. Adsorptionsschicht 12 ist bei der Ausbildung gemäß Figur 2 an der einen Trägerschicht 18 vorgesehen und mit der zweiten Trägerschicht 18 abgedeckt. Die einzige adsorptive Lage bzw. Adsorptionsschicht 12 gemäß Figur 2 ist gemeinsam mit den beiden Trägerschichten 18 bzw. Abdecklagen plissiert.

Ein Filterrahmen 20 umschließt das plissierte Gebilde aus der einzigen adsorptiven Lage bzw. Adsorptionsschicht 12 und den beiden Trägerschichten bzw. Abdecklagen 18 seitlich - wie in Figur 1 angedeutet ist.

Figur 3 verdeutlicht schematisch stark vergrößert und nicht maßstabgetreu eine Ausbildung des Filters 10, wobei der flächige Filterkörper zwei flächige adsorptive Lagen 12 aufweist, die jeweils eine Trägerschicht 18 und eine an der entsprechenden Trägerschicht 18 vorgesehene Adsorptionsschicht bzw. adsorptive Lage 12 aufweisen, wobei die beiden flächigen Filterkörper gemeinsam derart plissiert sind, daß die beiden Adsorptionsschichten bzw, adsorptiven Lagen 12 einander zugewandt und die Trägerschichten 18 voneinander abgewandt sind.

Das flächenexpandierte Schüttbettfilter 10 weist im Vergleich zu den bekannten volumenexpandierten Schüttbettfiltern "VES" folgende Vorteile auf:

Überraschenderweise hat sich gezeigt, daß durch das Einbringen von partikelförmigen Adsorbentien 14 in ein vorgegebenes Einbauvolumen, d.h. bei einer vorgesehenen Dicke der mindestens einen adsorptiven Lage von (4,0 bis 6,5) mm oder vorzugsweise bei einer vorgesehenen Gesamtdicke der beiden adsorptiven Lagen von (4,0 bis 6,5) mm bei einer entsprechend hohen Adsorbensmenge von 1500 g/m², vorzugsweise (1780 bis 2800) g/m², die spezifische Beladung der partikelförmigen Adsorbentien 14 im Filter 10 mit der Dimension (mg Schadstoffaufnahme/g Adsorbens) im Vergleich zu einem volumenexpandierten Schüttbettfilter gesteigert werden kann;

In einem gegebenen Einbauvolumen kann mit dem flächenexpandierten Schüttbettfilter 10 wesentlich mehr Aktivkohle angeordnet werden, so daß die absolute Filterleistung steigt ohne den Druckabfall zu erhöhen (sh. das weiter unten und in der Vergleichstabelle angegebene Beispiel A).

Beim Einbringen der gleichen Menge Aktivkohle wie bei einem volumenexpandierten Schüttbettfilter reduziert sich der Strömungswiderstand bei einem erfindungsgemäßen Filter deutlich (sh. das weiter unten und in der Vergleichstabelle angegebene Beispiel B).

Um mit dem flächenexpandierten Schüttbettfilter 10 eine vergleichbare Adsorptionsleistung wie bei einem volumenexpandierten Schüttbettfilter zu erzielen, wird weniger Aktivkohle benötigt, wodurch der Strömungswiderstand noch einmal reduziert wird (sh. das unten und in der Vergleichstabelle angegebene Beispiel C).

Das flächenexpandierte Schüttbettfilter 10 nach der Erfindung besitzt eine bessere S-Durchbruchscharakteristik als ein entsprechendes volumenexpandiertes Schüttbettfilter, d.h. sein Sofortdurchbruch und der Durchbruch nach einer definierten Zeit sind vergleichsweise niedrig.

Das flächenexpandierte Schüttbettfilter kann nach einer Fertigungstechnologie hergestellt werden, wie sie für Kombinationsfilter üblich ist, woraus folgt, daß der erfindungsgemäße flächenexpandierte Schüttbettfilter 10 in großen Stückzahlen kostengünstig herstellbar ist.

Nachfolgend werden die oben erwähnten Filter-Beispiele 1, 2 (Stand der Technik) sowie A, B und C (Erfindung) erläutert und in einer Vergleichstabelle gegenübergestellt. Die besagten Ausführungsbeispiele wurden jeweils unter gleichen Bedingungen vermessen. Das zur Verfügung stehende Einbauvolumen betrug jeweils 2400 ml, wobei die Filterhöhe, d.h. die Längenabmessung in Durchströmrichtung 40 mm betrug. Daraus resultiert ein FilterQuerschnitt von 600 cm². Bei allen Filter-Beispielen wurde derselbe Typ Granulatkohle mit einer Korngröße zwischen 0,15 mm und 1,00 mm verwendet.

### Stand der Technik:

### Beispiel 1

| | | |
|---|---|---|
| Aufbau: | 4 Lagen retikulierter PUR-Schaum einer Dicke von 10 mm, der mit | |
| | Granulatkohle imprägniert wurde | |
| | gesamte Aktivkohlemenge 420 g; entspricht einer spezifischen | |
| | Adsorbensmenge von 175 g/dm³ Einbauvolumen | |
| | | |
| Ergebnisse: | Druckabfall bei 6 kg/min | 370 Pa |
| | n-Butan-Speicherkapazität | 13,0 g |
| | (80 ppm, 50% r.F., 3 kg/min) | |
| | Adsorptionskapazität der Aktivkohle | |
| | im Filter (mg n-Butan pro g AK) | 30,9 mg/g |
| | | |
| | n-Butansofortdurchbruch | < 0,30 % |
| | 250 ppm, 50% r.F., 3 kg/min) | |
| | n-Butan-Durchbruch nach 20 sec. | < 3,00 % |
| | (500 ppm, 50% r.F., 3 kg/min) | |

Der Druckabfall (I), 370 Pa, die Aktivkohlemenge (II) 420 g sowie die n-Butan-Speicherkapazität (III) von 13,0 g des Beispiels 1 werden zum Vergleich mit den Beispielen A, B und C von Filtern gemäß der Erfindung als Normwerte herangezogen (als normiert bezeichnet).

### Beispiel 2

| | | |
|---|---|---|
| Aufbau: | 2 Lagen aus 20 mm dicken Aktivkohle-Platten gemäß DE 196 12 592 C2 mit | |
| | ca. 30 Kanälen pro cm² mit einem Durchmesser von je 1,00 mm | |
| | gesamte Aktivkohlemenge 800 g | |
| | | |
| Ergebnisse: | Druckabfall bei 6 kg/min | 200 Pa |
| | n-Butan-Speicherkapazität | 24,0 g |
| | (80 ppm, 50% r.F., 3 kg/min) | |
| | Adsorptionskapazität der Aktivkohle | 30 mg/g |
| | im Filter (mg n-Butan pro g AK) | |
| | n-Butansofortdurchbruch | < 3,00 % |
| | (250 ppm, 50% r.F., 3 kg/min) | |
| | n-Butan-Durchbruch nach 20 sec. | < 3,50 % |
| | (500 ppm, 50% r.F., 3 kg/min) | |

### Filter nach der Erfindung:

### Beispiel A

| | | |
|---|---|---|
| Aufbau: | FES mit Fasermatrix aus Klebstofffäden, wobei der gleiche Druckabfall, wie | |
| | beim AKGF des Beispiels 1 eingestellt wurde (Normierung) Medienfläche | |
| | 0,23 m² | |
| | Aktivkohlemenge 629 g (entspricht 2735g/m²); entspricht 262 g/dm³ | |
| | Einbauvolumen | |
| | Dicke 6,3 mm | |
| | | |
| Ergebnisse: | Druckabfall bei 6 kg/min | 370 Pa normiert (I) |
| | n-Butan-Speicherkapazität | 20,4 g |
| | (80 ppm, 50% r.F., 3 kg/min) | |
| | Adsorptionskapazität der Aktivkohle | 32,4 mg/g |
| | im Filter (mg n-Butan pro g Ak) | |
| | n-Butansofortdurchbruch | < 0,3 % |
| | (250 ppm, 50% r.F., 3 kg/min) | |
| | n-Butan-Durchbruch nach 20 sec. | < 1,0 % |
| | (500 ppm, 50% r.F., 3 kg/min) | |

### Beispiel B

| | | |
|---|---|---|
| Aufbau: | FES mit Matrix wie im Beispiel A, wobei die gleiche Aktivkohlemenge, wie | |
| | beim AKGF des Beispiels 1 eingebracht wurde (Normierung) | |
| | Medienflläche 0,15 m² | |
| | Aktivkohlemenge 420 g normiert (II) (entspricht 2800g/m²); entspricht | |
| | 175 g/dm³ Einbauvolumen | |
| | Dicke 6,4 mm | |
| | | |
| Ergebnisse: | Druckabfall bei 6 kg/min | 280 Pa |
| | n-Butan-Speicherkapazität | 14,9 g |
| | (80 ppm, 50% r.F., 3 kg/min) | |
| | Adsorptionskapazität der Aktivkohle | 35,5 mg/g |
| | im Filter (mg n-Butan pro g AK) | |
| | n-Butansofortdurchbruch | < 0,3 % |
| | (250 ppm, 50% r.F., 3 kg/min) | |
| | n-Butan-Durchbruch nach 20 sec | < 2,0 % |
| | (500 ppm, 50% r.F., 3 kg/min) | |

### Beispiel C

| | | |
|---|---|---|
| Aufbau: | FES mit Matrix gemäß Beispiel A, wobei die gleiche n-Butan | |
| | Speicherkapazität, wie beim AKGF des Beispiels 1 eingestellt wurde | |
| | (Normierung) | |
| | Medienfläche 0,23 m² | |
| | Aktivkohlemenge 410 g (entspricht 1780 g/m²); entspricht 171 g/dm³ | |
| | Einbauvolumen | |
| | Dicke 4,7 mm | |
| | | |
| Ergebnisse: | Druckabfall bei 6kg/min | 140 Pa |
| | n-Butan-Speicherkapazität | 13 g normiert (III) |

| Vergleichstabelle | Beispiel 1 | Beispiel 2 | Beispiel A | Beispiel B | Beispiel C |
|---|---|---|---|---|---|
| | 4 Lagen 10 mm retikulierter PUR-Schaum m.Granulatkohle imprägniert | 2 Lagen à 20 mm Aktivkohle-Platten 30 Kanäle/cm² Durchm. 1 mm | FES I Medienfläche 0,23 m² | FES II Medienfläche 0,15 m² | FES III Medienfläche 0,23 m² |
| Druckabfall bei 6kg/min | 370 Pa (I) | 200 Pa | 370 Pa (I) | 280 Pa | 140 Pa |
| n-Butan-Speicherkapazität (80 pm, 50% r.F., 3kg/min) | 13,0 g (III) | 24,0 g | 20,4 g | 14,9 g | 13,0 g (III) |
| Adsorptionskapazität der Aktivkohle im Filter (mg n-Butan pro g AK) | 30,9 mg/g | 30 mg/g | 32,4 mg/g | 35,5 mg/g | 32,0 mg/g |
| n-Butan-Sofortdurchbruch (250 ppm, 50% r.F.,3kg/min | < 0,30 % | <3,00 % | < 0,3 % | < 0,3 % | < 0,3 % |
| n-Butan-Durchbruch nach 20 sec (500 ppm, 50% r.F., 3kg/min) | < 3,00 % | 3,50 % | < 1,0 % | < 2,0 % | < 3,0 % |
| Aktivkohle-Menge | 420 g (II) | 800 g | 629 g | 420 g (II) | 410 g |
| | Stand der Technik | | Erfindung | | |

## Patentansprüche

1. Filter, insbesondere für ein Fahrzeug, mit einem flächigen Filterkörper, der mindestens eine flächige adsorptive Lage (12) aufweist, die eine Trägerschicht (18) und eine Adsorptionsschicht mit in einer dreidimensionalen Fasermatrix fixierten partikelförmigen Adsorbentien (14) aufweist,
**dadurch gekennzeichnet,**
**daß** die Adsorptionsschicht eine Adsorbensmenge von wenigstens 1500 g/m², vorzugsweise (1780 bis 2800) g/m², enthält und eine Dicke von (4,0 bis 6,5) mm aufweist, wobei die mindestens eine adsorptive Lage (12) plissiert und das plissierte Gebilde (22) aus der mindestens einen adsorptiven Lage (12) von einem Filterrahmen (20) seitlich umschlossen ist, und wobei die spezifische Adsorbensmenge > 140 g Adsorbens/dm³ Filtervolumen, vorzugsweise (170 bis 260) g Adsorbens/dm³ Filtervolumen, beträgt.

2. Filter nach Anspruch 1,
**dadurch gekennzeichnet,**
**daß** der flächige Filterkörper eine einzige flächige adsorptive Lage (12) mit einer Trägerschicht (18) und einer Adsorptionsschicht aufweist, wobei die Trägerschicht (18) abströmseitig vorgesehen ist.

3. Filter nach Anspruch 2,
**dadurch gekennzeichnet,**
**daß** auch anströmseitig eine Trägerschicht (18) vorgesehen ist.

4. Filter nach Anspruch 1,
**dadurch gekennzeichnet,**
**daß** der flächige Filterkörper zwei flächige adsorptive Lagen (12) aufweist, die jeweils eine Trägerschicht (18) und eine Adsorptionsschicht aufweisen und miteinander plissiert sind, wobei die Adsorptionsschichten (12) einander zugewandt und die Trägerschichten (18) voneinander abgewandt sind.

5. Filter nach einem der Ansprüche 1 bis 4,
**dadurch gekennzeichnet,**
**daß** die dreidimensionale Fasermatrix der/jeder Adsorptionsschicht aus gesprühten Klebstofffäden (16) besteht.

6. Filter nach Anspruch 1,
**dadurch gekennzeichnet,**
**daß** die partikelförmigen Adsorbentien (14) von Aktivkohlepartikeln gebildet sind.

7. Filter nach Anspruch 1,
**dadurch gekennzeichnet,**
**daß** die adsorptive Lage (12) Sorbienten und/oder Katalysator-Partikel aufweist.

8. Filter nach Anspruch 1,
**dadurch gekennzeichnet,**
**daß** die die Matrix bildenden Fasern (16) zumindest partiell elektrostatisch aufgeladen sind.

## Claims

1. Filter, in particular for a vehicle, with a sheet-like filter body having at least one sheet-like adsorptive ply (12) which has a carrier layer (18) and an adsorption layer with particulate adsorbents (14) fixed in a three-dimensional fibre matrix, **characterized in that** the adsorption layer contains an adsorbent quantity of at least 1500 g/m², preferably (1780 to 2800) g/m², and has a thickness of (4.0 to 6.5) mm, the at least one adsorptive ply (12) being pleated, and the pleated structure (22), which consists of the at least adsorptive ply (12), being surrounded laterally by a filter frame (20), and the specific adsorbent quantity amounting to > 140 g of adsorbent/dm³ of filter volume, preferably (170 to 260) g of adsorbent/dm³ of filter volume.

2. Filter according to Claim 1, **characterized in that** the sheet-like filter body has a single sheet-like adsorptive ply (12) with a carrier layer (18) and with an adsorption layer, the carrier layer (18) being provided on the outflow side.

3. Filter according to Claim 2, **characterized in that** a carrier layer (18) is also provided on the inflow side.

4. Filter according to Claim 1, **characterized in that** the sheet-like filter body has two sheet-like adsorptive plies (12) which in each case have a carrier layer (18) and an adsorption layer and are pleated with one another, the adsorption layers (12) facing one another and the carrier layers (18) facing away from one another.

5. Filter according to one of Claims 1 to 4, **characterized in that** the three-dimensional fibre matrix of the/each adsorption layer consists of sprayed adhesive threads (16).

6. Filter according to Claim 1, **characterized in that** the particulate adsorbents (14) are formed by activated-charcoal particles.

7. Filter according to Claim 1, **characterized in that** the adsorptive ply (12) has sorbents and/or catalyst particles.

8. Filter according to Claim 1, **characterized in that** the fibres (16) forming the matrix are at least partially charged electrostatically.

## Revendications

1. Filtre, en particulier pour un véhicule, avec un corps de filtre plan, qui présente au moins une couche adsorbante plane (12), qui présente une couche support (18) et une couche d'adsorption avec des adsorbants (14) en forme de particules fixés dans une matrice de fibres tridimensionnelle,
**caractérisé en ce**
**que** la couche d'adsorption contient une quantité d'adsorbant d'au moins 1500 g/m², de préférence de (1780 à 2800) g/m², et présente une épaisseur de (4,0 à 6,5) mm, l'au moins une couche adsorbante (12) étant plissée et la structure plissée (22) formée de l'au moins une couche adsorbante (12) étant entourée latéralement par un cadre de filtre (20) et la quantité d'adsorbant spécifique étant >140 g / d'adsorbant / dm³ de volume de filtre, de préférence de (170 à 260) g d'adsorbant / dm³ volume de filtre.

2. Filtre selon la revendication 1,
**caractérisé en ce**
**que** le corps de filtre plan présente une seule couche adsorbante plane (12) dotée d'une couche support (18) et d'une couche d'adsorption, la couche support (18) étant prévue en aval.

3. Filtre selon la revendication 2,
**caractérisé en ce**
**qu'**une couche support (18) est aussi prévue en amont.

4. Filtre selon la revendication 1,
**caractérisé en ce**
**que** le corps de filtre plan présente deux couches adsorbantes planes (12), qui présentent respectivement une couche support (18) et une couche d'adsorption et sont plissées les unes avec les autres, les couches adsorbantes (12) étant tournées les unes vers les autres et les couches support (18) étant opposées les unes aux autres.

5. Filtre selon l'une quelconque des revendications 1 à 4,
**caractérisé en ce**
**que** la matrice de fibres tridimensionnelle de la/chaque couche d'adsorption est en fils de colle (16) pulvérisés.

6. Filtre selon la revendication 1,
**caractérisé en ce**
**que** les adsorbants (14) en forme de particules sont formés de particules de charbon actif.

7. Filtre selon la revendication 1,
**caractérisé en ce**
**que** la couche adsorbante (12) présente des adsorbants et/ou des particules de catalyseur.

8. Filtre selon la revendication 1,
**caractérisé en ce**
**que** les fibres formant la matrice (16) sont chargées au moins partiellement de manière électrostatique.
